# EUROPEAN PATENT APPLICATION

(11) **EP 1 860 882 A2**
(43) Date of publication of application: **28.11.2007**
(21) Application number: 07108788.6
(22) Date of filing: 23.05.2007
(51) Int. Cl.: H04N 7/173

(54) **Broadcast receiver, forward data channel (FDC) interfacing method, and method for processing broadcast signal**

(30) Priority: 25.05.2006 KR 20060046974
(71) Applicant: LG Electronics Inc., Seoul, 150-721 (KR)
(72) Inventor: Hwang, Sun Ho, SEOUL 151-182 (KR)
(74) Representative: Cabinet Plasseraud

(57) **Abstract**

A broadcast receiver, a Forward Data Channel (FDC) interface method, and a broadcast signal processing method are disclosed. The Forward Data Channel (FDC) interface method includes: requesting a tuning of a Forward Data Channel (FDC); receiving data of the Forward Data Channel (FDC) tuned/demodulated by the request, and specific information indicating the presence or absence of validity of the FDC data; and performing an error correction decoding process, if the demodulated data is valid by referring to the specific information indicating the validity.

## Description

This application claims the benefit of Korean Patent Application No. 10-2006-0046974, filed on May 25, 2006, which is hereby incorporated by reference as if fully set forth herein.

### BACKGROUND

### Field of the Disclosure

The present disclosure relates to a broadcast receiver, a Forward Data Channel (FDC) interfacing method, and a method for processing a broadcast signal.

### Discussion of the Related Art

Generally, a cable broadcast system includes a cable headend acting as a transmitter for transmitting cable broadcast signals and a cable broadcast receiver for receiving the cable broadcast signals.

The cable headend is called a System Operation (SO) headend or a Multiple System Operator (MSO) headend. The cable broadcast receiver uses an open cable scheme for separating a cable card including a Conditional Access (CA) system from a main body. The cable card is called a Point Of Deployment (POD) module, and can be detachably connected to a slot of the main body of the cable broadcast receiver. The main body in which the cable card is inserted is called a host. In other words, the set of the cable card and the host is called a cable broadcast receiver.

Presently, the United States of America has established the standard of the digital cable broadcast receiver as the Open Cable scheme. Presently, the above-mentioned Open Cable scheme is being set to the standard of the digital cable broadcast receiver in the Republic of Korea.

The Open Cable Scheme of the United States of America has been developed by the Cable Labs Inc. The Open Cable scheme of the United States of America uses a QAM scheme as a modulation scheme, uses an MPEG2 scheme as a video compression and multiplexing scheme, uses a Dolby AC-3 as an audio compression scheme, and uses a Cable card acting as the POD module as a security module interface. A bi-directional communication of data (e.g., broadcast data, SMS messages, service messages, and authentication messages) is provided between a cable headend and a subscriber digital terminal (i.e., settop box), the subscriber can easily use content data (e.g., entertainment-, home-shopping-, and other information, etc.) of the digital cable broadcast.

Therefore, although the digital cable broadcast has a variety of general standards for the bi-directional communication between the cable headend and the subscriber digital terminal, many developers are conducting intensive research into a method for processing the settop box and its cable card to provide the subscriber with more superior services.

The cable broadcast receiver is connected to the cable headend indicative of a broadcast station capable of transmitting digital cable programs. The headend transmits A/V (Audio/Video) broadcast programs to the cable broadcast receiver via an In-Band area from among a cable broadcast frequency band, and transmits a variety of data via the Out Of Band (OOB).

The cable broadcast receiver updates a channel map of the broadcast receiver, and supports the OOB band to transmit not only VOD data but also bi-directional data.

For the convenience of description, each data channel received in the cable broadcast receiver via the OOB band is called a Forward Data Channel (FDC), and each data channel received in the headend via the OOB band is called a Return Data Channel (RDC).

The conventional cable broadcast receiver has a disadvantage in that it performs unnecessary operations between the host and the cable card even when a tuned reception channel is a very weak signal channel or non-signal channel, such that it must perform unnecessary operations between the host and the cable card irrespective of the FDC status.

### SUMMARY

Accordingly, the present application is directed to a broadcast receiver, a Forward Data Channel (FDC) interfacing method, and a method for processing a broadcast signal, that substantially obviate one or more problems due to limitations and disadvantages of the

### related art.

This disclosure is to provide a broadcast receiver, a method for interfacing a Forward Data Channel (FDC), and a method for processing a broadcast signal, which can enable a host to transmit specific information indicating the presence or absence of data validity of the tuned Forward Data Channel (FDC) to a cable card, thereby reducing the number of unnecessary operations of a meaningless channel of the cable card.

Additional advantages, objects, and features of the invention will be set forth in part in the description which follows and in part will become apparent to those having ordinary skill in the art upon examination of the following or may be learned from practice of this application. The objectives and other advantages of the implementation may be realized and attained by the structure particularly pointed out in the written description and claims hereof as well as the appended drawings.

As embodied and broadly described herein, a Forward Data Channel (FDC) interface method comprises: requesting a tuning of a Forward Data Channel (FDC); receiving data of the Forward Data Channel (FDC) tuned/demodulated by the request, and specific information indicating the presence or absence of validity of the FDC data; and performing an error correction decoding process, if the demodulated data is valid by referring to the specific information indicating the validity.

For example, the Forward Data Channel (FDC) interface method further comprises: requesting a tuning of the next Forward Data Channel (FDC), if the demodulated data is invalid by referring to the specific information.

For example, the Forward Data Channel (FDC) is indicative of an Out Of Band (OOB) channel.

In another aspect of the implementation, there is provided a Forward Data Channel (FDC) interface method comprising: receiving a tuning request of a Forward Data Channel (FDC); tuning/demodulating the Forward Data Channel (FDC) according to the tuning request; and transmitting data of the demodulated Forward Data Channel (FDC) and specific information indicating the presence or absence of validity of the demodulated Forward Data Channel (FDC) data.

For example, the specific information indicating the presence or absence of the demodulated FDC data is contained in a Forward Data Channel (FDC) response message, and is then transmitted.

For example, the Forward Data Channel (FDC) is demodulated by a Quadrature Phase Shift Keying (QPSK) scheme.

For example, the Forward Data Channel (FDC) response message, if the demodulated FDC data is in a sync lock status, displays the demodulated FDC data as valid data, or the Forward Data Channel (FDC) response message, if the demodulated FDC data is in a sync unlock status, displays the demodulated FDC data as invalid data.

In yet another aspect of the implementation, there is provided a Forward Data Channel (FDC) interface method comprising: requesting, by a cable card, a tuning of a Forward Data Channel (FDC) from a host; tuning/demodulating, by the host, the requested Forward Data Channel (FDC), and transmitting the demodulated data and specific information indicating the present invention or absence of validity of the data to the cable card; and if the demodulated data is valid data on the basis of the specific information indicating the presence or absence of the validity, performing an error correction decoding process by the cable card.

For example, the cable card, if the Forward Data Channel (FDC) data is invalid, does not perform the error correction decoding process, and requests a tuning of the next Forward Data Channel (FDC) from the host.

In yet another aspect of the implementation, there is provided a broadcast receiver comprising: a cable card for requesting a turning of a Forward Data Channel (FDC), performing an error correction decoding process if data of the Forward Data Channel (FDC) tuned/demodulated by the request is valid, and requesting a tuning of the next Forward Data Channel (FDC) if data of the Forward Data Channel (FDC) tuned/demodulated by the request is invalid; and a host for performing tuning/demodulating operations of a corresponding Forward Data Channel (FDC) upon receiving the request, and transmitting specific information indicating the presence or absence of the demodulated data along with the Forward Data Channel (FDC) data.

For example, the Forward Data Channel (FDC) is indicative of an Out Of Band (OOB) channel.

For example, the host includes a demodulator for demodulating the tuned Forward Data Channel (FDC) data using a Quadrature Phase Shift Keying (QPSK) scheme.

For example, the host includes specific information indicating the presence or absence of validity of the demodulated data in a Forward Data Channel (FDC) response message, and transmits the Forward Data Channel (FDC) response message including the specific information to the cable card.

In yet another aspect of the implementation, there is provided a broadcast signal processing method comprising: a) tuning a Forward Data Channel (FDC); b) determining the presence or absence of data validity of the tuned Forward Data Channel (FDC); c) generating a field for indicating the presence or absence of the data validity; and d) transmitting a response message including the generated field.

For example, the step d) for determining the presence or absence of the data validity includes: if the Forward Data Channel (FDC) data is in a sync lock status, displaying the FDC data as valid data; and if the Forward Data Channel (FDC) data is in a sync unlock status, displaying the FCD data as invalid data.

For example, the data validity of the Forward Data Channel (FDC) is displayed on a status field.

It is to be understood that both the foregoing general description and the following detailed description of this disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate implementation of the disclosure and together with the description serve to explain the principle of the application. In the drawings:

FIG. 1 is a diagram illustrating a Forward Data Channel (FDC) request message and Forward Data Channel (FDC) response message between a cable card and a host in broadcast receiver;

FIG. 2 is a table illustrating a variety of values contained in the "status_field" area of a channel status response message;

FIGS. 3A~3B are flow charts illustrating a method for interfacing a Forward Data Channel (FDC) of a broadcast receiver;

FIG. 4 is a block diagram illustrating a broadcast receiver for interfacing data with a Forward Data Channel (FDC) of a broadcast receiver; and

FIG. 5 is a flow chart illustrating a method for processing a broadcast signal according to one implementation.

### DETAILED DESCRIPTION

Reference will now be made in detail to the preferred implementation of the present application, examples of which are illustrated in the accompanying drawings. Wherever possible, the same reference numbers will be used throughout the drawings to refer to the same or like parts.

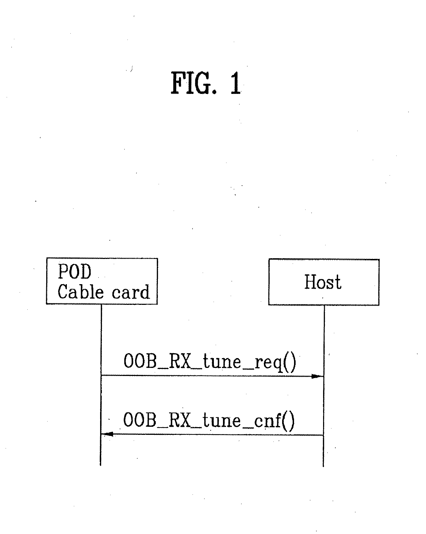

FIG. 1 is a diagram illustrating a Forward Data Channel (FDC) request message and Forward Data Channel (FDC) response message between a cable card and a host in a broadcast receiver.

Referring to FIG. 1, a Forward Data Channel (FDC) (i.e., a data RX channel) request message and a data status response message are communicated between the cable card of the cable broadcast receiver and the host. The cable card has a diagnostic function capable of monitoring individual states of the host according to the Open Cable standard.

For example, the cable card includes a generic diagnostic protocol from among interface resources of the Open Cable standard. The generic diagnostic protocol has been established to allow a user (i.e., a local object) object or a cable headend (i.e., a remote object (MSO headend)) to monitor individual status information of the host in real time. The generic diagnostic protocol has defined a varity of diagnostic functions shown in the following Table 1:

**[Table 1]**

| Diagnostic ID | Diagnostic |
|---|---|
| 00 | Set-Top memory allocation |
| 01 | Software version |
| 02 | Firmware version |
| 03 | MAC status |
| 04 | FAT status |
| 05 | FDC status |
| 06 | Current Channel Report |
| 07 | 1394 Port |
| 08 | DVI status |
| 09~FF | Reserved for future use. |

If the diagnostic request is transmitted from the cable card to the host and the ID of the diagnostic request is set to "05", the host checks the Forward Data Channel (FDC) status, and informs the cable card of the checked result. In other words, the channel request message for diagnosing a forward data status from the cable card to the host is "OOB_RX_tune_req()APDU Syntax" shown in the following Table 2:

**[Table 2]**

| Syntax | No. of Bits | Mnemonic |
|---|---|---|
| OOB_RX_tune_req() { | | |
| OOB_RX_tune_req_tag | 24 | unimsbf |
| length_field() | | |
| RF_RX_frequency_value | 16 | unimsbf |
| RF_RX_data_rate | 8 | unimsbf |
| } | | |

Referring to Table 2, 24 bits are assigned to the "OOB_RX_tune_req_tag" field, for example, "0x9F8406" may be assigned to the "OOB_RX_tune_req_tag" field. The "RF_RX_frequency_value" field indicates a Forward Data Channel (FDC) frequency to be tuned by the host. Generally, the cable broadcast frequency of the OOB band is denoted by the equation "value*0.05 + 50 MHz", and is transmitted from a bandwidth of 70~120 MHz.

The "RF_RX_data_rate" field indicates a transmission data bit rate, and is denoted by four transmission rates (i.e., 00b-2,048 kbps, 01b-2,048 kbps, 10b-1,544 kbps, and 11b-3,088kbps).

Upon receiving the Forward Data Channel (FDC) request from the cable card as shown in Table 2, the host turns a corresponding Forward Data Channel (FDC), and determines the presence or absence of data validity of the tuned Forward Data Channel (FDC). The host transmits the determined result indicating the presence or absence of the turned Forward Data Channel (FDC) validity to the cable card. In this case, a channel status response message transmitted from the host to the cable card is the "OOB_RX_tune_cnf()APDU Syntax" message, and a detailed description of the OOB_RX_tune_cnf () APDU Syntax" message is shown in the following Table 3:

**[Table 3]**

| Syntax | No. of Bits | Mnemonic |
|---|---|---|
| OOB_RX_tune_cnf() { | | |
| OOB_RX_tune_cnf_tag | 24 | uimsbf |
| Length_field() | | |
| Status_field | 8 | uimsbf |
| } | | |

With reference to Table 3, 24 bits are assigned to the "OOB_RX_tune_cnf_tag" field, for example, "0x9F8407" may be assigned to the "OOB_RX_tune_cnf_tag" field.

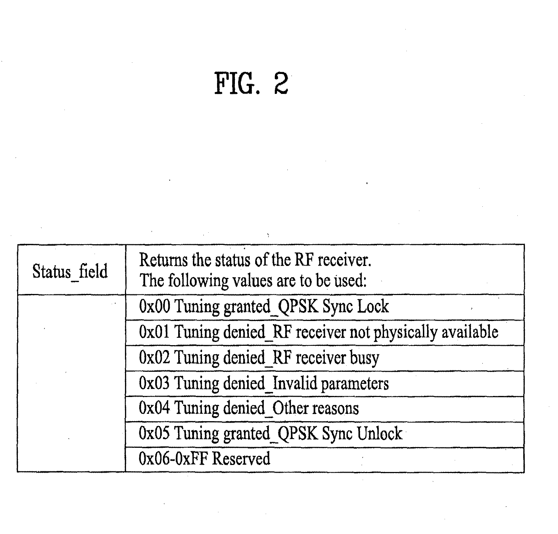

The "status_field" field is indicative of a field for indicating the requested FDC status, and transmits the result of the channel tuned by the host. The "status_field" values will hereinafter be described with reference to FIG. 2.

FIG. 2 is a table illustrating a variety of values contained in the "status_field" area of a channel status response message.

Referring to FIG. 2, the host tunes the corresponding Forward Data Channel (FDC) according to the channel request message received from the cable card, demodulates the received data using the QPSK scheme, and transmits the demodulated result to the cable card. Subsequently, in order to determine the presence or absence of the demodulated data, the host checks the Sync Lock/Unlock status of the QPSK scheme, and displays the checked result on the "status_field" of FIG. 2.

If it is determined that the demodulated data has the sync lock status, "0x00" is displayed on the "status_field". Otherwise, if it is determined that the demodulated data has the sync unlock status, "0x05" is displayed on the "status_field". The above-mentioned sync lock status indicates that the received data is valid. The above-mentioned sync unlock status indicates that the received data is invalid (e.g., no-signal status, or weak signal channel status).

In this case, if the received channel status response message (OOB_RX_tune_cnf) has the "0x00" value, the cable card determines that data received from the host is valid, and performs an error correction decoding operation (i.e., "Tuning granted_QPSK Sync Lock" of FIG. 2). If the "status_field" has the "0x05" value, the cable card determines that data received from the host is invalid, does not perform the error correction decoding operation, and requests the tuning of the next Forward Data Channel (FDC) from the host (i.e., "Tuning granted_QPSK Sync Unlock" of FIG. 2).
The "Status_field" value of 0x01 ~ 0x04 indicates that the tuning of the Forward Data Channel (FDC) has not been executed.

In more detail, if the "Status_field" value is "0x01", this indicates that the RF receiver cannot be physically used, as denoted by "Tuning denied_RF receiver not physically available" in FIG. 2.

If the "Status_field" value is "0x02", this indicates that the RF receiver is currently using, as denoted by "Tuning denied_RF receiver busy" in FIG. 2.

If the "Status_field" value is "0x03", this indicates that parameters of the requested Forward Data Channel (FDC) have an undesirable condition, as denoted by "Tuning denied_Invalid parameters" in FIG. 2.

If the "Status_field" value is "0x04", this indicates that broadcast signals have not been tuned by other reasons, as denoted by "Tuning denied_Other reasons" in FIG. 2. If the "Status_field" value is "0x06 ~0xFF", this indicates a reserved area.

The cable card according to the present application does not perform the error correction decoding process via the meaningless Forward Data Channel (FDC), and can directly go to the next channel request process, such that it can reduce a time consumed for detecting the valid channel.

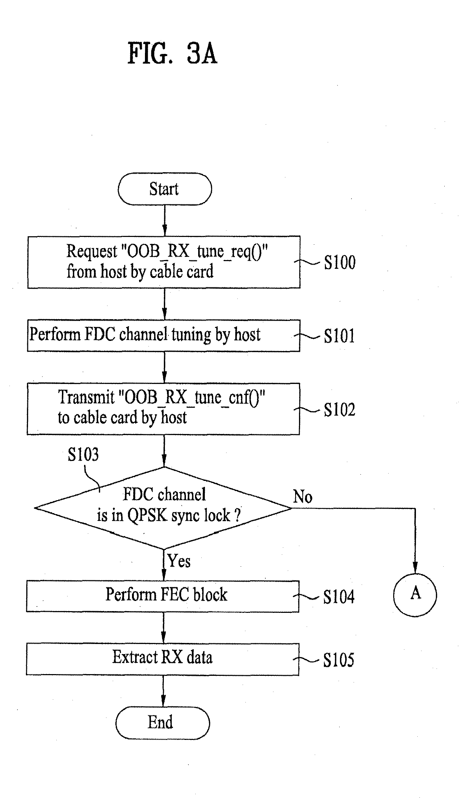

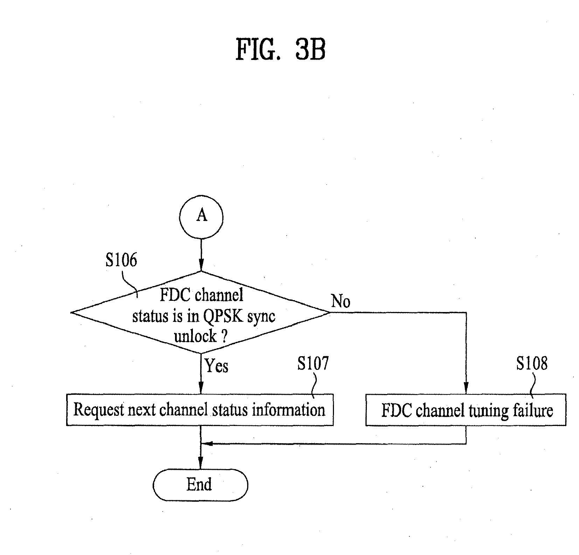

FIGS. 3A~3B are flow charts illustrating a method for interfacing a Forward Data Channel (FDC) of a broadcast receiver.

Referring to FIGS. 3A~ 3B, the cable card transmits the "OOB_RX_turn_req()" message to the host, and request the tuning of the Forward Data Channel (FDC) at step S100. Therefore, the host tunes the corresponding Forward Data Channel (FDC) using the parameters of the OOB_RX_turn_req()" value at step S101.

The host according to the present application demodulates data of the tuned Forward Data Channel (FDC) using the QPSK scheme, transmits the demodulated data to the cable card, and at the same time determines the presence or absence of validity of the Forward Data Channel (FDC).

The host displays the determined result on the "status_field", and transmits the "OOB_RX_tune_cnf()" message acting as a channel status response message to the cable card at step S102. If the response message of the Forward Data Channel (FDC) is transmitted from the host to the cable card, the cable card determines the presence or absence of the Forward Data Channel (FDC) validity on the basis of the received Forward Data Channel (FDC) response message at step S103.

In this case, if it is determined that data of the Forward Data Channel (FDC) is valid, the cable card performs an error correction decoding process by driving the Forward Error Correction (FEC) block at step S104, and extracts corresponding data at step S105. Otherwise, if it is determined that data of the Forward Data Channel (FDC) is invalid (i.e., QPSK Sync Unlock) at step S106, the cable card request the next channel tuning from the host without performing the error correction decoding process at step S107.

If the "status_ field" value is any one of 0x01 ~ 0x04 values, this indicates that the tuning of the corresponding Forward Data Channel (FDC) requested by the cable card has failed at step S108.

Therefore, the broadcast receiver determines the presence or absence of data validity, skips over an invalid Forward Data Channel (FDC), reduces the number of unnecessary operations of a cable card and the host, increases the lifetime of a system, and detects only the valid Forward Data Channel (FDC), thereby rapidly providing a user with necessary information.

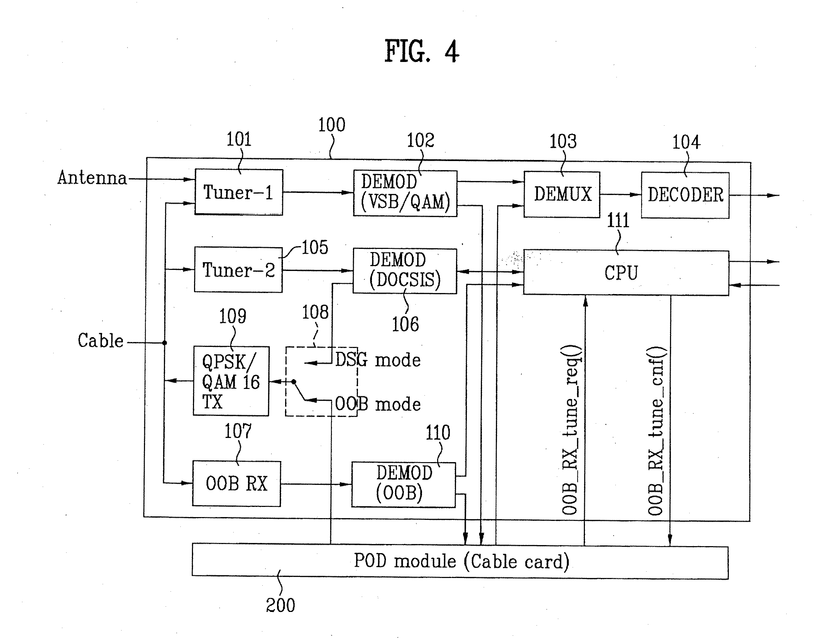

FIG. 4 is a block diagram illustrating a broadcast receiver for interfacing data with a Forward Data Channel (FDC) according to a preferred implementation of the present application.

Referring to FIG. 4, the first tuner 101 of the host 100 tunes only a specific channel frequency from among terrestrial A/V broadcast data transmitted via an antenna or cable A/V broadcast data transmitted via the in-band area, and outputs the tuned result to the first demodulator 102.

In this case, the terrestrial broadcast data and the cable broadcast data have different transmission schemes, such that a demodulation scheme of the first demodulator 102 of the terrestrial broadcast data is different from that of the cable broadcast data.

In other words, the terrestrial A/V broadcast signals are modulated into other signals according to the Vestigial Sideband Modulation (VSB) scheme, such that the modulated result is transmitted to a destination. The cable A/V broadcast signals are modulated into other signals according to the Quadrature Amplitude Modulation (QAM) scheme, such that the modulated result is transmitted to a destination.

Therefore, if the channel frequency tuned by the first tuner 101 is indicative of the terrestrial broadcast data, it is demodulated by the first demodulator 102 according to the VSB scheme. If the channel frequency tuned by the first tuner 101 is indicative of the cable broadcast data, it is demodulated by the first demodulator 102 according to the QAM scheme.

The demultiplexer 103 separates the multiplexed video signal and the multiplexed audio signal from each other, and outputs the separated signals to the decoder 104. The decoder 104 decompresses the A/V signals compressed by the video decoding algorithm and the audio algorithm, and displays the decompressed A/V signals.

In the meantime, the second tuner 105 tunes a specific channel frequency from among the cable broadcast data transmitted via a cable line according to the DOCSIS Set-Top Gateway scheme, and outputs the tuned result to the second demodulator 106. The second demodulator 106 demodulates the DSG-based data broadcast signals, and outputs the demodulated signals to the controller 111 denoted by "CPU" in FIG. 4.

If the bi-directional communication can be available between the cable broadcast and the cable broadcast receiver, a variety of information is transmitted from the cable broadcast receiver to the cable broadcast according to the OOB or DSG scheme, for example, a pay-for-use program application, and host diagnostic information, etc. For this purpose, the switching unit 108 is contained in the broadcast receiver according to the present application.

In more detail, if the OOB scheme is used, user information or system diagnostic information is transmitted to the modulator 109 via the cable card 200 and the switching unit 108. The modulator 109 modulates the received signals into other signals according to the QPSK scheme, such that the modulated resultant signals are transmitted to the cable headend. If the DSG scheme is used, user information or system diagnostic information is transmitted to the modulator 109 via the controller 111 and the switching unit 108, is modulated by the modulator 109 according to the QAM-16 scheme, and is then transmitted to the cable headend via the cable line.

The OOB RX 107 is indicative of a third tuner of the present application. The OOB RX 107 tunes a specific channel frequency from among broadcast data transmitted to the OOB via the cable line, and outputs the tuned result to the third demodulator 110.

The third tuner 110 demodulates the received data according to the QPSK scheme, and outputs the demodulated data to the cable card 200. When the matching between the cable card 200 and the host 100 is operated in the OOB mode, the cable card transmits the "OOB_RX_tune_req()" message acting as a Forward Data Channel (FDC) request message to the controller 111 of the host.

The controller 111 controls the OOB RX 107, such that the Forward Data Channel (FDC) requested by the cable card can be tuned by the OOB RX 107. The controller 111 determines the presence or absence of the validity of the Forward Data Channel (FDC) data tuned/demodulated by the request.

The controller 111 displays specific information indicating the presence or absence of data validity on the "status_field" of the "OOB_RX_tune_cnf()" message indicating the Forward Data Channel (FDC) status response message, such that it transmits the validity result to the cable card 200.

The cable card 200 performs the error correction decoding process by driving the FEC block on the condition that the Forward Data Channel (FDC) data received from the "status field" of the "OOB_RX_tune_cnf()" message is valid, and extracts corresponding data. Otherwise, if the Forward Data Channel (FDC) data received from the "status_field" of the "OOB_RX_tune_cnf()" message is invalid, the cable card 200 requests the next Forward Data Channel (FDC) tuning from the controller 111.

The communication device defined in the above-mentioned description does not additionally include a conventional hardware CAS module in either the subscriber settop box or an integrated-type TV, and downloads a software CAS module provided by an enterprise into the subscriber settop box or the integrated-type TV, such that conventional functions can be normally executed. For example, according to the method for downloading the soft CAS module, if a security processor built in the settop box is connected to a network, conventional access (CA) images are automatically downloaded from the headend, such that conventional functions can be normally executed.

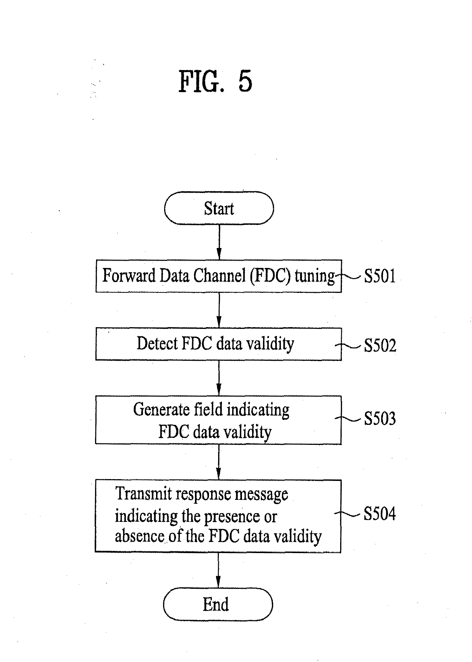

FIG. 5 is a flow chart illustrating a method for processing a broadcast signal according to a preferred implementation of the present application.

Referring to FIG. 5, the broadcast receiver according to the present application receives a tuning request signal of the Forward Data Channel (FDC) from the host, and tunes the Forward Data Channel (FDC) at step S501.

If data of the Forward Data Channel (FDC) is in the sync lock status, the broadcast receiver determines the FDC data to be valid data at step S502. Otherwise, if data of the Forward Data Channel (FDC) is in the sync unlock status, the broadcast receiver determines the FDC data to be invalid data at step S502. The broadcast receiver displays specific information indicating the presence or absence of the FDC data validity on the "status_field" at step S503. The in-band channel tuning response message including the "status_field" is transmitted to the host at step S504.

It should be noted that most terminology disclosed in the present application is defined in consideration of functions of the present application, and can be differently determined according to intention of those skilled in the art or usual practices. Therefore, it is preferable that the above-mentioned terminology be understood on the basis of all contents disclosed in the present application.

As apparent from the above description, the present application enables a host to transmit specific information indicating the presence or absence of data validity of the tuned Forward Data Channel (FDC) to a cable card, thereby reducing the number of unnecessary operations of a meaningless channel of the cable card.

Therefore, the broadcast receiver determines the presence or absence of data validity, skips over an invalid Forward Data Channel (FDC), reduces the number of unnecessary operations of a cable card and the host, increases the lifetime of a system, and detects only the valid Forward Data Channel (FDC), thereby rapidly providing a user with necessary information.

Other implementations are within the scope of the following claims. The details of one or more implementations are set forth in the accompanying drawings and the description below. Other features will be apparent from the description and drawings, and from the claims.

## Claims

1. A Forward Data Channel (FDC) interface method comprising:
requesting a tuning of a Forward Data Channel (FDC);
receiving data of the Forward Data Channel (FDC) tuned/demodulated by the request, and specific information indicating the presence or absence of validity of the FDC data; and
performing an error correction decoding process, if the demodulated data is valid by referring to the specific information indicating the validity.

2. The Forward Data Channel (FDC) interface method according to claim 1, further comprising:
requesting a tuning of the next Forward Data Channel (FDC), if the demodulated data is invalid by referring to the specific information.

3. The Forward Data Channel (FDC) interface method according to claim 1, wherein the Forward Data Channel (FDC) is indicative of an Out Of Band (OOB) channel.

4. A Forward Data Channel (FDC) interface method comprising:
receiving a tuning request of a Forward Data Channel (FDC);
tuning/demodulating the Forward Data Channel (FDC) according to the tuning request; and
transmitting data of the demodulated Forward Data Channel (FDC) and specific information indicating the presence or absence of validity of the demodulated Forward Data Channel (FDC) data.

5. The Forward Data Channel (FDC) interface method according to claim 4, wherein the specific information indicating the presence or absence of the demodulated FDC data is contained in a Forward Data Channel (FDC) response message, and is then transmitted.

6. The Forward Data Channel (FDC) interface method according to claim 4, wherein the Forward Data Channel (FDC) is demodulated by a Quadrature Phase Shift Keying (QPSK) scheme.

7. The Forward Data Channel (FDC) interface method according to claim 5, wherein:
the Forward Data Channel (FDC) response message, if the demodulated FDC data is in a sync lock status, displays the demodulated FDC data as valid data, or
the Forward Data Channel (FDC) response message, if the demodulated FDC data is in a sync unlock status, displays the demodulated FDC data as invalid data.

8. A Forward Data Channel (FDC) interface method comprising:
requesting, by a cable card, a tuning of a Forward Data Channel (FDC) from a host;
tuning/demodulating, by the host, the requested Forward Data Channel (FDC), and transmitting the demodulated data and specific information indicating the present invention or absence of validity of the data to the cable card; and
if the demodulated data is valid data on the basis of the specific information indicating the presence or absence of the validity, performing an error correction decoding process by the cable card.

9. The Forward Data Channel (FDC) interface method according to claim 8, wherein:
the cable card, if the Forward Data Channel (FDC) data is invalid, does not perform the error correction decoding process, and requests a tuning of the next Forward Data Channel (FDC) from the host.

10. A broadcast receiver comprising:
a cable card for requesting a turning of a Forward Data Channel (FDC), performing an error correction decoding process if data of the Forward Data Channel (FDC) tuned/demodulated by the request is valid, and requesting a tuning of the next Forward Data Channel (FDC) if data of the Forward Data Channel (FDC) tuned/demodulated by the request is invalid; and
a host for performing tuning/demodulating operations of a corresponding Forward Data Channel (FDC) upon receiving the request, and transmitting specific information indicating the presence or absence of the demodulated data along with the Forward Data Channel (FDC) data.

11. The broadcast receiver according to claim 10, wherein the Forward Data Channel (FDC) is indicative of an Out Of Band (OOB) channel.

12. The broadcast receiver according to claim 10, wherein the host includes a demodulator for demodulating the tuned Forward Data Channel (FDC) data using a Quadrature Phase Shift Keying (QPSK) scheme.

13. The broadcast receiver according to claim 10, wherein the host includes specific information indicating the presence or absence of validity of the demodulated data in a Forward Data Channel (FDC) response message, and transmits the Forward Data Channel (FDC) response message including the specific information to the cable card.

14. A broadcast signal processing method comprising:
a) tuning a Forward Data Channel (FDC);
b) determining the presence or absence of data validity of the tuned Forward Data Channel (FDC);
c) generating a field for indicating the presence or absence of the data validity; and
d) transmitting a response message including the generated field.

15. The broadcast signal processing method according to claim 14, wherein the step d) for determining the presence or absence of the data validity includes:
if the Forward Data Channel (FDC) data is in a sync lock status, displaying the FDC data as valid data; and
if the Forward Data Channel (FDC) data is in a sync unlock status, displaying the FCD data as invalid data.

16. The broadcast signal processing method according to claim 14, wherein the data validity of the Forward Data Channel (FDC) is displayed on a status field.
